# FASCICULE DE BREVET EUROPEEN

(11) **EP 1 442 938 B1**
(45) Date de publication et mention de la délivrance du brevet: **10.08.2005**
(21) Numéro de dépôt: 03104480.3
(22) Date de dépôt: 02.12.2003
(51) Int. Cl.: B60R 9/042

(54) **Article de bagagerie rigide et étanche destiné à être installé sur un toit de véhicule**
Starrer und dichter Gepäckartikel für Installation auf einem Fahrzeugdach
Rigid and sealed luggage article for installation on a vehicle roof

(30) Priorité: 24.01.2003 FR 0300765
(43) Date de publication de la demande: 04.08.2004
(73) Titulaire: Gibag, 69003 Lyon (FR)
(72) Inventeur: GIGNOUX, Régis, 69003, LYON (FR)
(74) Mandataire: Palix, Stéphane

(56) Documents cités:
- US-A- 5 535 929
- US-A- 5 649 655
- US-A1- 2002 125 281

## Description

### Domaine Technique

L'invention se rapporte à un article de bagagerie rigide et étanche destiné à être installé sur un toit de véhicule. Cet article de bagagerie possède un encombrement sensiblement équivalent à celui d'une valise ce qui lui permet d'être facilement manipulable. Cet article présente également des agencements particuliers permettant d'en garantir l'étanchéité.

Elle vise plus particulièrement un agencement permettant de transporter une telle valise sur un toit de voiture grâce à des moyens de liaison bien particuliers entre la valise et le toit du véhicule.

### Art antérieur

De façon générale, les articles de bagagerie de type valise, destinés à être installés sur un toit de véhicule, sont disposés sur une galerie fixée au toit du véhicule. Ils sont alors maintenus sur cette galerie au moyen de dispositifs de fixation tels que des sangles ou des tendeurs notamment.

Cependant, ce type de liaison est long et fastidieux à mettre en oeuvre. De plus, pour des raisons évidentes de sécurité, ce type de liaison n'est pas satisfaisant.

On connaît également les systèmes appelés « coffres de toit » qui possèdent un volume plus important. Ils ne sont pas de ce fait manipulables par une seule personne et leur installation peut être particulièrement longue et complexe. De plus, il généralement est nécessaire que le coffre soit vide pour l'installer ou le désinstaller.

Il existe aussi des mécanismes permettant de faciliter la mise en place latérale d'objets lourds et volumineux sur une galerie de toit. Ainsi, le document US 5 535 929 décrit un exemple d'une galerie de toit est dans laquelle une portion de la galerie est apte à coulisser et à pivoter par rapport à une portion fixe de la galerie, pour rendre plus accessible la zone de chargement, tout en restant constamment reliée au toit. Autrement dit, le coffre de toit est donc rapporté sur une partie de la galerie qui coulisse par rapport à la partie de la galerie qui est fixée sur le toit.

De tels dispositifs ne sont donc pas rapidement démontables et ne peuvent pas être utilisables à la manière d'une valise.

De même, dans le document US 5 649 655, il est décrit un mécanisme pour faciliter la mise en place d'objets lourds et volumineux sur un toit de véhicule présentant un haillon. Plus précisément, le chargement est tout d'abord rapporté sur un support, avant d'être mis en place sur le mécanisme solidaire du toit, au niveau de la zone inclinée du haillon. Puis, le support pivote autour d'un axe pour venir en position horizontale.

Avec ce mécanisme, il est donc nécessaire de rapporter préalablement le chargement sur un support annexe qui est muni d'une barre de pivot. De plus, il est également nécessaire que la barre de pivot émerge du volume d'encombrement de l'objet transporté sur le toit du véhicule.

Un problème que cherche à résoudre l'invention est de fournir un bagage qui combine l'aspect pratique d'une valise, avec la possibilité de transporter ce bagage sur un toit de véhicule, à la manière d'un coffre de toit, tout en étant plus rapide à installer qu'un coffre de toit.

Ainsi, le but de l'invention est de permettre la mise en place directe d'un bagage ne présentant aucun appendice sur un toit tout en conservant la possibilité de l'utiliser en tant que bagage lorsqu'il est désolidarisé du toit.

### Exposé de l'invention

L'invention concerne donc un article de bagagerie rigide et avantageusement étanche tel qu'une valise, destiné à être installé sur un toit de véhicule automobile.

Il se caractérise par le fait qu'il possède des moyens intégrés à l'intérieur de son volume d'encombrement et aptes à réaliser une liaison glissière dans un plan horizontal avec des moyens de forme complémentaire fixés sur le toit. De cette manière, seul un mouvement de translation est possible entre l'article et les éléments de forme complémentaire fixés sur le toit. Il comporte également des moyens aptes à assurer le blocage et le verrouillage de cette translation de l'article de bagagerie par rapport au toit.

Autrement dit, l'invention porte sur un article de bagagerie ne présentant aucune excroissance mais qui est muni de moyens permettant de le mettre en place et de le retirer très facilement sur le toit d'un véhicule. Les moyens participant à la liaison glissière et solidaire de la valise n'émergent donc pas de son volume d'encombrement. Le mécanisme utilisé permet de réaliser une translation et un blocage par rapport à des éléments fixes lié au toit du véhicule.

La liaison glissière est obtenue grâce à un ou plusieurs éléments de coulissement se déplaçant dans un ou des profils enveloppants. Ce profil enveloppe l'élément de coulissement de façon à canaliser le déplacement selon une seule direction, dans les deux sens. Les éléments formant la liaison glissière peuvent être disposés indifféremment sur le toit ou dans un logement de la valise de manière à ce qu'ils n'émergent pas de son volume d'encombrement général.

Ainsi, selon une première variante de l'invention, le profil enveloppant est incorporé dans l'article de bagagerie, de telle sorte qu'il est intégré à l'intérieur du volume d'encombrement du bagage. De cette manière, l'article de bagagerie ne présente aucune arête vive saillante susceptible de blesser une personne manipulant la valise.

Le profil enveloppant de cette liaison glissière peut être obtenu au moyen d'une pièce indépendante, telle qu'un rail, rapportée sur l'une des faces de l'article de bagagerie. Ce rail rapporté peut être alors par exemple installé à l'intérieur d'un logement réalisé sur une face de l'article de bagagerie.

Ce profil enveloppant peut également être directement formé par une portion de l'une des faces de l'article de bagagerie. Dans ce cas, il n'est donc pas nécessaire de rapporter une autre pièce, car le rail fait partie intégrante de la valise, et est réalisé directement par la matière de la valise.

Il est possible également de combiner les deux solutions précédentes. Dans ce cas, une gorge est réalisée dans l'article de bagagerie et deux portions de plaque parallèles sont rapportées de façon à refermer partiellement la gorge et ainsi réaliser un profil enveloppant l'élément de coulissement. Ces deux portions sont disposées de façon à affleurer la paroi externe de l'article de bagagerie. Elles sont disposées avec un écartement suffisant pour permettre au dispositif de coulissement de coulisser librement. Avantageusement les deux portions de plaque peuvent se rejoindre et intégrer les moyens de verrouillage sur la face de la valise où se trouve la poignée.

Selon une seconde variante de l'invention, le profil enveloppant peut être rapporté sur un support intermédiaire solidarisé au toit du véhicule. Dans ce cas, ce sont les éléments coulissants qui sont rapportés sur l'article de bagagerie. Ils peuvent être alors disposés dans un logement de façon à ne pas émerger du volume général d'encombrement de l'article de bagagerie.

Le profil enveloppant peut être continu sur toute sa longueur, mais peut également être discontinu et comporter plusieurs tronçons.

Le profil enveloppant peut épouser, au niveau de l'extrémité d'introduction de l'élément de coulissement, une forme évasée pour permettre l'introduction aisée de cet élément de coulissement. Autrement dit, le profil enveloppant peut comporter une section plus large au niveau de l'extrémité de l'introduction de l'élément de coulissement.

La forme évasée peut alors être effectuée en largeur et/ou en hauteur. L'évasement en largeur permet de réaliser le centrage de l'élément coulissement lors de son introduction dans le profile enveloppant. L'évasement en hauteur permet d'introduire l'élément de coulissement dans le profil enveloppant avec une certaine tolérance angulaire au niveau de la position de la valise. En effet, la position horizontale de la valise nécessaire pour l'introduction est difficile à réaliser lorsque celle-ci est pleine.

De plus, le profil enveloppant peut être débouchant au niveau de ses deux extrémités. Ainsi la première extrémité permet l'introduction de l'élément de coulissement et la deuxième peut permettre de recevoir une pièce rapportée telle qu'un élément de verrouillage notamment.

L'élément de coulissement peut être un élément roulant possédant au moins une roulette. L'axe de la roulette peut être orienté selon diverses directions. Dans une configuration privilégiée, l'axe de la roulette est orienté parallèlement au plan de déplacement de l'élément roulant et perpendiculairement à la direction de déplacement. Cependant, dans d'autres variantes, l'axe de la roulette peut également être orienté perpendiculairement au plan de déplacement.

Selon une autre variante de l'invention, l'élément de coulissement peut être un élément glissant de type patin. Dans ce cas, le patin est, de façon préférentielle, réalisé dans un matériau à faible coefficient de frottement, tel que du polytétrafluoroéthylène ou polyamide notamment.

Quelle que soit la variante choisie, il est avantageux de relier entre -eux, selon la direction de la liaison glissière, deux éléments de coulissement par une pièce allongée dont une portion permet de guider la translation de la valise. Cette pièce allongée vient coulisser entre les deux parois refermant le profil enveloppant. Cela empêche un blocage de la valise du à sa mise en travers.

Le verrouillage de la translation peut être obtenu grâce à différents moyens tels qu'une serrure à clef ou à code.

L'arrêt en translation de l'élément coulissant peut être également obtenu au moyen d'une butée axiale supplémentaire. De cette manière, l'arrêt en translation et le verrouillage de la liaison sont obtenus par deux éléments distincts.

Dans les deux cas de figures concernant la position des éléments de la liaison glissière, le support intermédiaire peut être réalisé grâce à un ensemble de barres, communément appelées « barres de toit », solidarisées au toit par des moyens de fixation mécaniques ou magnétiques.

Le support intermédiaire peut aussi consister simplement en un ensemble d'éléments indépendants sur lesquels sont disposés les éléments de la liaison glissière destinés à être fixe par rapport au toit. Dans ce cas également, les éléments indépendants peuvent être solidarisés au toit par des moyens de fixation mécaniques ou magnétiques.

### Description sommaire des figures

La manière de réaliser l'invention ainsi que les avantages qui en découlent, ressortiront bien de la description du mode de réalisation qui suit, donné à titre indicatif et non limitatif, à l'appui des figures annexées dans lesquelles :
- les figures 1 et 2 sont des vues en perspective éclatée de deux variantes de l'article de bagagerie dans une position permettant la visualisation des différents éléments de la liaison glissière, conformément à l'invention ;
- la figure 3 est une vue de dessus permettant la visualisation de la mise en position de la valise, conforme à l'invention ;
- la figure 4, 5 et 6 sont des coupes transversales de plusieurs variantes d'un profil enveloppant et d'un élément de coulissement, conformément à l'invention ;
- la figure 7 est une section médiane de la liaison glissière en dehors des zones où sont implantés les éléments de coulissement, conformément à l'invention.

### Manière de décrire l'invention

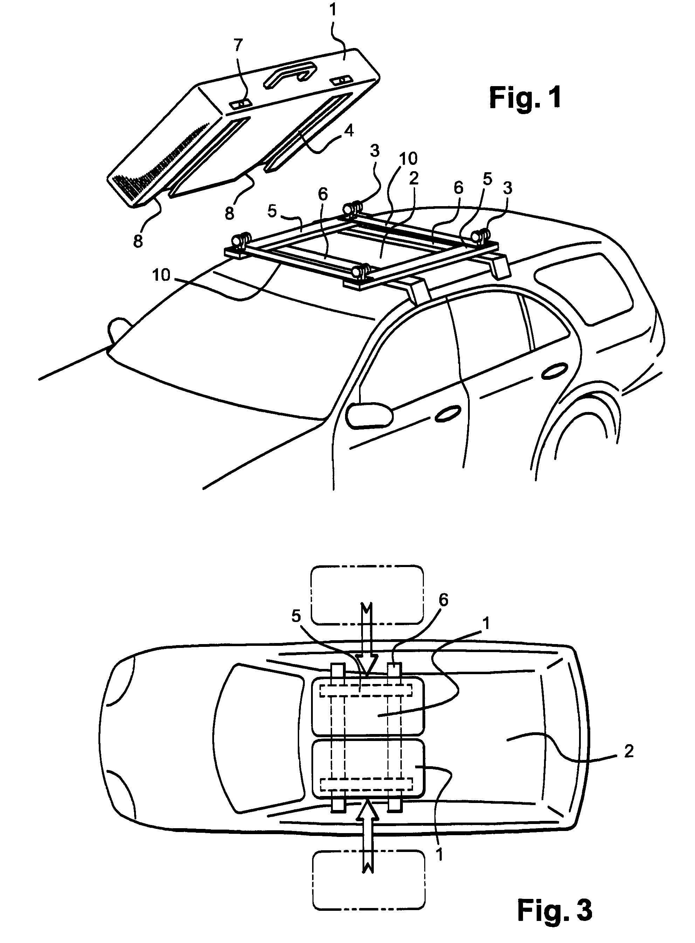

Comme déjà évoqué, l'invention concerne un article de bagagerie rigide et étanche destiné à être installé sur un toit de véhicule. Dans la variante représentée en figure 1, les éléments de coulissement (3) sont liés au toit (2) du véhicule. Ainsi, le profil enveloppant (4) est incorporé dans l'article de bagagerie (1) de telle sorte qu'il n'émerge pas du volume global de l'article (1).

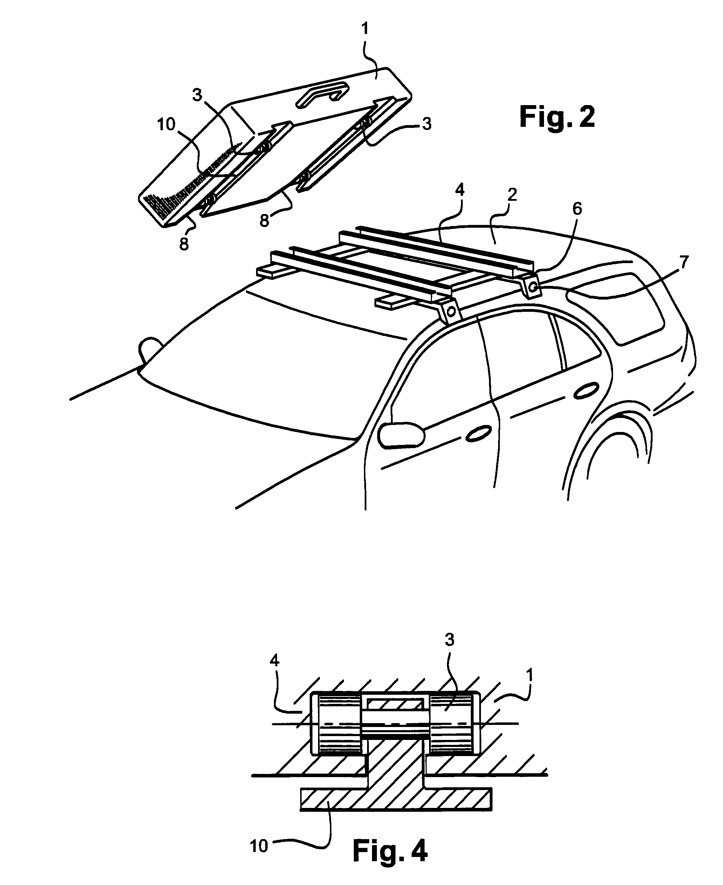

A l'inverse dans la variante représentée en figure 2, le profil enveloppant (4) est lié au toit (2) du véhicule. Ainsi, les éléments de coulissement (3) sont incorporés dans l'article de bagagerie (1) de telle sorte qu'ils n'émergent pas du volume global de l'article (1).

Les figures 1 et 2 sont des vues éclatées d'ensemble de deux variantes de l'invention destinées à permettre de visualiser les différents éléments constituant la liaison glissière, mais qui ne montrent pas le bagage dans une position d'emploi.

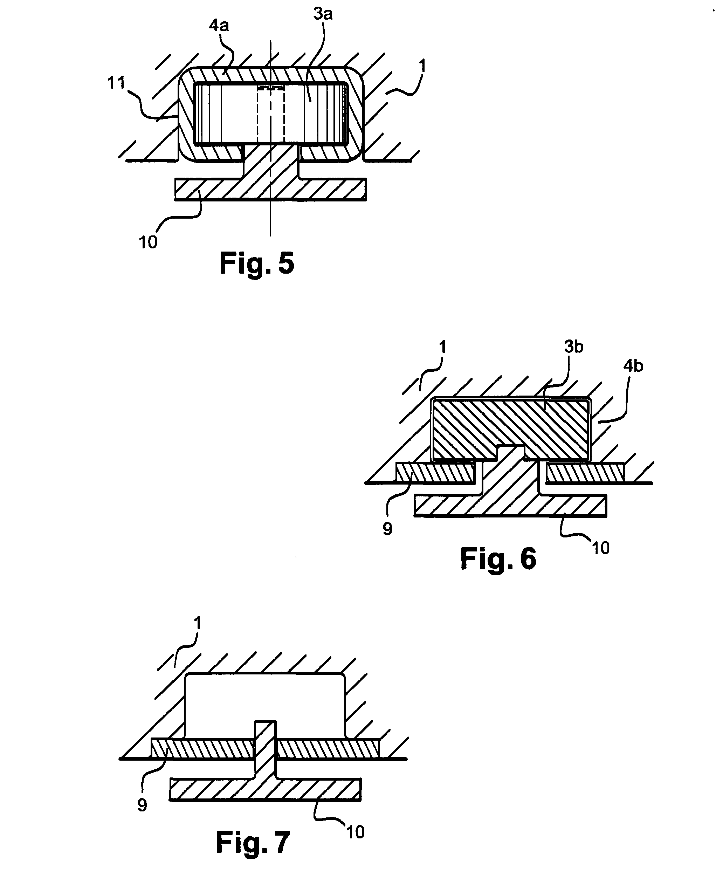

L'introduction du profil enveloppant (4), sur les éléments de coulissement (3), s'effectue dans une direction transversale par rapport à la direction longitudinale du véhicule. Il est avantageux de relier, selon la direction de la liaison glissière, les éléments de coulissements (3) entre-eux par une pièce allongée (10) dont une portion permet de guider la translation de la valise (1). Telle que représenté en figure 7, cette pièce allongée (10) vient coulisser entre les deux parois refermant le profil enveloppant (4). Ceci permet alors d'éviter un blocage de la valise (1), par exemple lors de son introduction dans l'élément de forme complémentaire disposé sur le toit (2) du véhicule, en obligeant les éléments complémentaires présents sur la valise de s'orienter selon la direction de la glissière.

L'introduction s'effectue par la mise en contact de l'élément de coulissement (3) avec l'extrémité évasée (8) du profil enveloppant (4). La forme évasée peut alors être effectuée en largeur et/ou en hauteur. L'évasement en largeur permet de réaliser le centrage de l'élément coulissement (3) lors de son introduction dans le profile enveloppant (4). L'évasement en hauteur permet d'introduire l'élément de coulissement (3) dans le profil enveloppant (4) avec une certaine tolérance angulaire au niveau de la position de la valise (1). En effet, la position horizontale de la valise (1) nécessaire pour l'introduction est difficile à réaliser lorsque celle-ci est pleine.

Comme illustré à la figure 3, l'élément de coulissement (3) possède une forme complémentaire du profil enveloppant (4). Cet agencement particulier permet de réaliser la liaison glissière de l'article de bagagerie (1) par rapport au toit du véhicule (2). L'article de bagagerie (1) peut alors être introduit selon un mouvement de translation sur les éléments de coulissement (3). Selon les dimensions des bagages utilisés, il est également possible de disposer un élément de bagagerie de chaque côté du véhicule, c'est-à-dire à la fois du côté conducteur et du côté passager.

Le mouvement de la translation est alors soit stoppé par un élément de blocage puis verrouillé par un élément de verrouillage (7), soit simultanément bloqué et verrouillé par l'élément de verrouillage (7). Dans la représentation de la figure 1, l'élément de verrouillage (7) est disposé sur l'article de bagagerie. Cependant, dans une autre variante représentée en figure 2, l'élément de verrouillage (7) peut également être disposé sur le support (6) solidaire du toit (2).

Dans la représentation donnée à la figure 4, le profil enveloppant (4) est formé complètement par l'une des faces de l'article de bagagerie (1). Dans cette variante, le profil enveloppant (4) est réalisée par le matériau plastique injecté pour réaliser la valise. Ce profil enveloppant (4) est réalisé de façon à être intégré à l'intérieur du volume d'encombrement global de l'article de bagagerie (1). Ce profil enveloppant (4) peut être continu ou discontinu sur toute sa longueur. C'est-à-dire que ce profil enveloppant (4) peut également être obtenu par une série de plusieurs tronçons. Le profil enveloppant (4) présente de plus, au niveau de l'extrémité d'introduction, un léger évasement (8)en largeur et/ou en hauteur permettant de faciliter la mise en place de l'élément de coulissement (3) à l'intérieur du profil enveloppant (4).

L'élément de coulissement (3) représenté est un élément roulant possédant deux roulettes. L'axe de ces roulettes est orienté de façon parallèle par rapport au plan de déplacement et perpendiculaire à la direction de déplacement. Cet élément (3) est agencé sur une pièce allongée (10) réalisant le guidage rectiligne de la liaison glissière entre les deux parois en regard refermant le profil enveloppant. Cette pièce allongée (10) est elle-même rapportée sur un support intermédiaire (5) lié au toit (2).

L'invention couvre également la possibilité d'inverser la position des différents éléments réalisant la liaison glissière, ainsi l'élément de coulissement (3) peut tout aussi bien être intégré à l'intérieur du volume global de l'article de bagagerie (1) et le profil enveloppant (4) être disposé sur le support intermédiaire (5, 6) solidaire du toit (2) du véhicule.

La figure 5 est la représentation en coupe d'une deuxième variante d'un profil enveloppant (4a) et d'un élément de coulissement (3a).

Dans ce cas, le profil enveloppant (4a) est obtenu au moyen d'une pièce annexe à l'article de bagagerie (1) qui est rapportée sur une face de l'article de bagagerie (1). Ce profil enveloppant (4a) est inséré dans une gorge (11) de façon à ne pas émerger du volume d'encombrement global de l'article de bagagerie (1). Des moyens de bridage, non représentés, permettent alors d'assurer la solidarisation du profil enveloppant (4a) sur l'article de bagagerie (1). Ce profil enveloppant (4a) peut être continu ou discontinu sur toute sa longueur. C'est-à-dire que ce profil enveloppant (4a) peut également être obtenu par une série de plusieurs tronçons. Le profil enveloppant (4a) présente de plus, au niveau de l'extrémité d'introduction, un léger évasement (8) en largeur et/ou en hauteur permettant de faciliter la mise en place de l'élément de coulissement (3a) à l'intérieur du profil enveloppant (4a).

L'élément de coulissement (3a) ici représenté est un élément roulant possédant une roulette. L'axe de la roulette est orienté de façon perpendiculaire par rapport au plan de déplacement. Cet élément (3a) est agencé sur une pièce allongée (10), telle que représentée en figure 7, réalisant le guidage rectiligne de la liaison glissière entre les deux parois en regard refermant le profil enveloppant. Cette pièce allongée (10) est elle-même rapportée sur un support intermédiaire (5) lié au toit (2).

La figure 6 est la représentation en coupe d'une troisième variante d'un profil enveloppant (4b) et d'un élément de coulissement (3b).

Dans ce cas, le profil enveloppant (4b) est formé partiellement par l'une des faces de l'article de bagagerie (1). Une gorge est alors réalisée dans l'article de bagagerie (1) et deux portions de plaques parallèles (9) sont rapportées de façon à réaliser un profil enveloppant (4b) à l'intérieur duquel se déplace l'élément de coulissement (3b). Ces deux portions de plaques (9) sont disposées de façon à affleurer la paroi externe de l'article de bagagerie (1). Elles présentent également un écartement suffisant pour permettre au dispositif de coulissement (3b) de coulisser librement. Ce profil enveloppant (4b) peut être continu ou discontinu sur toute sa longueur. C'est-à-dire que ce profil enveloppant (4b) peut également être obtenu par une série de plusieurs tronçons. Le profil enveloppant (4b) présente de plus, au niveau de l'extrémité d'introduction, un léger évasement (8) en largeur et/ou en hauteur permettant de faciliter la mise en place de l'élément de coulissement (3b) à l'intérieur du profil enveloppant (4b). Avantageusement, les deux portions (9) peuvent se rejoindre sur la face de la valise (1) où se trouve la poignée et intégrer un moyen de verrouillage de la translation de la valise (1).

L'élément de coulissement (3b) ici représenté est un élément de glissement de type patin réalisé dans un matériau à faible coefficient de frottement, tel que du polytétrafluoroéthylène ou du polyamide notamment. Cet élément (3b) est agencé sur une pièce allongée (10), telle que représentée en figure 7, réalisant le guidage rectiligne de la liaison glissière entre les deux parois en regard des deux pièces longilignes (9) refermant le profil enveloppant. Cette pièce allongée (10) est elle-même rapportée sur un support intermédiaire (5) lié au toit (2).

L'invention ne se limite pas à ces différentes variantes, elle couvre de même toute combinaison entre les différentes variantes proposées dans le but d'obtenir une liaison de type glissière transversale entre un élément de bagagerie et le toit d'un véhicule.

Il ressort de ce qui précède qu'un article de bagagerie conforme à l'invention présente de multiples avantages, notamment :
- il permet aux personnes disposant de véhicules dont le volume du coffre ne permet pas d'introduire des éléments volumineux, de générer un espace de rangement supplémentaire ;
- son encombrement général est identique à celui d'une valise, ce qui permet d'être manipulé aisément par une seule personne ;
- la liaison glissière réalisée entre l'article de bagagerie (1) et le toit du véhicule (2) permet de réaliser une solidarisation en toute sécurité de l'article de bagagerie (1) par rapport au toit (2) ;
- les moyens de coulissement à l'intérieur du profil enveloppant (4) permettent une mise en place et un retrait très rapide de l'article de bagagerie (1) par rapport au toit ;
- la manipulation s'effectue sans effort, hormis celui engendré par le déplacement de la valise.

## Revendications

1. Article de bagagerie (1) rigide destiné à être installé sur un toit (2) de véhicule **caractérisé en ce qu'**il est muni de moyens intégrés à l'intérieur de son volume d'encombrement et aptes à réaliser une liaison glissière dans un plan horizontal avec au moins un élément de forme complémentaire fixé sur ledit toit (2) de manière à autoriser la translation de l'article (1) par rapport au toit (2), et de moyens aptes à assurer le blocage et le verrouillage de la translation de l'article de bagagerie (1) par rapport au toit (2).

2. Article selon la revendication 1, **caractérisé en ce que** les moyens aptes à réaliser la liaison glissière comportent au moins un élément de coulissement (3, 3a, 3b) se déplaçant dans au moins un profil enveloppant (4, 4a, 4b), de façon à obtenir un déplacement selon une seule direction.

3. Article selon la revendication 2, **caractérisé en ce que** le profil enveloppant (4, 4a, 4b) est incorporé dans l'article de bagagerie (1) de telle sorte que le profil enveloppant (4, 4a, 4b) intégrés à l'intérieur de son volume d'encombrement de l'article (1).

4. Article selon la revendication 3, **caractérisé en ce que** le profil enveloppant (4a) est une pièce indépendante rapportée tel qu'un rail, sur l'article de bagagerie (1).

5. Article selon la revendication 3, **caractérisé en ce que** le rail (4a) rapporté est installé dans un logement (11) de l'article de bagagerie (1).

6. Article selon la revendication 3, **caractérisé en ce que** le profil enveloppant (4, 4b) est formé au moins en partie par une portion de l'une des faces de l'article de bagagerie (1).

7. Article selon la revendication 2, **caractérisé en ce que** le profil enveloppant (4a) est rapporté sur un support intermédiaire (5) solidarisé au toit (2) du véhicule.

8. Article selon la revendication 2, **caractérisé en ce que** le profil enveloppant (4, 4a, 4b) est continu.

9. Article selon la revendication 2, **caractérisé en ce que** le profil enveloppant est discontinu.

10. Article selon la revendication 2, **caractérisé en ce que** le profil enveloppant (4) épouse, à son extrémité d'introduction de l'élément de coulissement, une forme évasée (8) pour faciliter l'introduction de l'élément de coulissement (3) dans le dit profil enveloppant (4).

11. Article selon la revendication 2, **caractérisé en ce que** l'élément de coulissement est incorporé dans l'article de bagagerie (1) de telle sorte que l'élément de coulissement est intégré à l'intérieur de son volume d'encombrement.

12. Article selon la revendication 2, **caractérisé en ce que** l'élément de coulissement (3, 3a, 3b) est rapporté sur un support intermédiaire (5) solidarisé au toit (2) du véhicule.

13. Article selon la revendication 2, **caractérisé en ce que** l'élément de coulissement (3, 3a) est un élément roulant possédant au moins une roulette.

14. Article selon la revendication 13, **caractérisé en ce que** l'axe de la roulette est parallèle au plan de déplacement et perpendiculaire à la direction de déplacement.

15. Article selon la revendication 13, **caractérisé en ce que** l'axe de la roulette est perpendiculaire au plan de déplacement.

16. Article selon la revendication 2, **caractérisé en ce que** l'élément de coulissement (3b) est un élément glissant de type patin.

17. Article selon la revendication 1, **caractérisé en ce que** l'élément assurant le blocage de la translation comporte un moyen de verrouillage.

18. Article selon la revendication 1, **caractérisé en ce que** l'élément assurant le blocage de la translation comporte une butée axiale.

## Patentansprüche

1. Steifer Gepäckartikel (1), der dazu bestimmt ist, auf einem Fahrzeugdach (2) installiert zu werden, **dadurch gekennzeichnet, daß** er mit Mitteln versehen ist, die innerhalb seines Abmessungsvolumens integriert sind und die dazu geeignet sind, eine Gleitverbindung in einer Horizontalebene mit mindestens einem auf dem genannten Dach (2) befestigten Element mit komplementärer Form herzustellen, um die Translationsbewegung des Artikels (1) in Bezug auf das Dach (2) zu erlauben, und daß er mit Mitteln versehen ist, die dazu geeignet sind, die Blockierung und Verriegelung der Translation des Gepäckartikels (1) in Bezug auf das Dach (2) sicherzustellen.

2. Artikel nach Anspruch 1, **dadurch gekennzeichnet, daß** die zur Herstellung der Gleitverbindung geeigneten Mittel mindestens ein sich in mindestens einem umhüllenden Profil (4, 4a, 4b) bewegendes Gleitelement (3, 3a, 3b) umfassen, um eine Bewegung in nur einer Richtung zu erhalten.

3. Artikel nach Anspruch 2, **dadurch gekennzeichnet, daß** das umhüllende Profil (4, 4a, 4b) in den Gepäckartikel (1) eingearbeitet ist, so daß das umhüllende Profil (4, 4a, 4b) innerhalb des Abmessungsvolumens des Artikels (1) integriert ist.

4. Artikel nach Anspruch 3, **dadurch gekennzeichnet, daß** das umhüllende Profil (4a) ein unabhängiges an dem Gepäckartikel (1) angebrachtes Teil wie eine Schiene ist.

5. Artikel nach Anspruch 3, **dadurch gekennzeichnet, daß** die angebrachte Schiene (4a) in einer Aufnahme (11) des Gepäckartikels (1) installiert ist.

6. Artikel nach Anspruch 3, **dadurch gekennzeichnet, daß** das umhüllende Profil (4, 4b) mindestens teilweise durch einen Abschnitt einer der Seiten des Gepäckartikels (1) gebildet wird.

7. Artikel nach Anspruch 2, **dadurch gekennzeichnet, daß** das umhüllende Profil (4a) an einem mit dem Fahrzeugdach (2) fest verbundenen Zwischenträger (5) angebracht ist.

8. Artikel nach Anspruch 2, **dadurch gekennzeichnet, daß** das umhüllende Profil (4, 4a, 4b) durchgehend verläuft.

9. Artikel nach Anspruch 2, **dadurch gekennzeichnet, daß** das umhüllende Profil unterbrochen ist.

10. Artikel nach Anspruch 2, **dadurch gekennzeichnet, daß** das umhüllende Profil (4) an seinem Ende zur Einführung des Gleitelements eine ausgeweitete Form (8) annimmt, um die Einführung des Gleitelements (3) in das genannte umhüllende Profil (4) zu vereinfachen.

11. Artikel nach Anspruch 2, **dadurch gekennzeichnet, daß** das Gleitelement in den Gepäckartikel (1) eingearbeitet ist, so daß das Gleitelement innerhalb seines Abmessungsvolumens integriert ist.

12. Artikel nach Anspruch 2, **dadurch gekennzeichnet, daß** das Gleitelement (3, 3a, 3b) an einem mit dem Fahrzeugdach (2) fest verbundenen Zwischenträger (5) angebracht ist.

13. Artikel nach Anspruch 2, **dadurch gekennzeichnet, daß** das Gleitelement (3, 3a) ein mindestens eine Rolle aufweisendes Rollelement ist.

14. Artikel nach Anspruch 13, **dadurch gekennzeichnet, daß** die Achse der Rolle parallel zur Bewegungsebene und rechtwinklig zur Bewegungsrichtung ist.

15. Artikel nach Anspruch 13, **dadurch gekennzeichnet, daß** die Achse der Rolle rechtwinklig zur Bewegungsebene ist.

16. Artikel nach Anspruch 2, **dadurch gekennzeichnet, daß** das Gleitelement (3b) ein gleitendes Element vom Typ Gleitschuh ist.

17. Artikel nach Anspruch 1, **dadurch gekennzeichnet, daß** das die Blockierung der Translation sicherstellende Element ein Verriegelungsmittel umfaßt.

18. Artikel nach Anspruch 1, **dadurch gekennzeichnet, daß** das die Blockierung der Translation sicherstellende Element einen Axialanschlag umfaßt.

## Claims

1. Rigid item of luggage (1) intended to be installed on the roof (2) of a vehicle **characterized in that** it is equipped with means incorporated within its envelope volume and able to make a sliding connection, in a horizontal plane, with at least one element of complementary shape fixed to the said roof (2) so as to allow the item (1) a translational movement with respect to the roof (2), and with means able to immobilize and lock the translational movement of the item of luggage (1) with respect to the roof (2).

2. Item according to Claim 1, **characterized in that** the means able to produce the sliding connection comprise at least one sliding element (3, 3a, 3b) moving in at least one wrap-round profile (4, 4a, 4b) so as to obtain movement in just one direction.

3. Item according to Claim 2, **characterized in that** the wrap-round profile (4, 4a, 4b) is incorporated into the item of luggage (1) in such a way that the wrap-round profile (4, 4a, 4b) is incorporated within the envelope volume of the item (1).

4. Item according to Claim 3, **characterized in that** the wrap-round profile (4a) is an attached independent component such as a rail, attached to the item of luggage (1).

5. Item according to Claim 3, **characterized in that** the attached rail (4a) is installed in a housing (11) of the item of luggage (1).

6. Item according to Claim 3, **characterized in that** the wrap-round profile (4, 4b) is formed at least in part by a portion of one of the faces of the item of luggage (1).

7. Item according to Claim 2, **characterized in that** the wrap-round profile (4a) is attached to an intermediate support (5) secured to the roof (2) of the vehicle.

8. Item according to Claim 2, **characterized in that** the wrap-round profile (4, 4a, 4b) is continuous.

9. Item according to Claim 2, **characterized in that** the wrap-round profile is discontinuous.

10. Item according to Claim 2, **characterized in that** the wrap-round profile (4), at its end for the introduction of the sliding element, takes on a flared shape (8) to facilitate the introduction of the sliding element (3) into the said wrap-round profile (4).

11. Item according to Claim 2, **characterized in that** the sliding element is incorporated into the item of luggage (1) in such a way that the sliding element is built in inside its envelope volume.

12. Item according to Claim 2, **characterized in that** the sliding element (3, 3a, 3b) is attached to an intermediate support (5) secured to the roof (2) of the vehicle.

13. Item according to Claim 2, **characterized in that** the sliding element (3, 3a) is a rolling element possessing at least one roller.

14. Item according to Claim 13, **characterized in that** the axis of the roller is parallel to the plane of travel and perpendicular to the direction of travel.

15. Item according to Claim 13, **characterized in that** the axis of the roller is perpendicular to the plane of travel.

16. Item according to Claim 2, **characterized in that** the sliding element (3b) is a gliding element of the glide type.

17. Item according to Claim 1, **characterized in that** the element that provides the translational immobilization comprises a locking means.

18. Item according to Claim 1, **characterized in that** the element that provides the translational immobilization comprises an axial stop.
